# EUROPÄISCHE PATENTANMELDUNG

(11) **EP 2 502 600 A1**
(43) Veröffentlichungstag der Anmeldung: **26.09.2012**
(21) Anmeldenummer: 11002296.9
(22) Anmeldetag: 21.03.2011
(51) Int. Cl.: A61C 8/00

(54) **Dental-Implantatsystem**

(71) Anmelder: Biodenta Swiss AG, 9442 Berneck (CH)
(72) Erfinder: Sung, Huang Mao, Taichung City 408, Taiwan ( R.O.C. ) (TW); Zipprich, Holger, 64283 Darmstadt (DE)
(74) Vertreter: Walkenhorst, Andreas

(57) **Zusammenfassung**

Ein Dentalimplantat (1) mit einem zur Einbringung in einen Kieferknochen vorgesehenen ersten Implantat-Teil (2) und mit einem diesem zugeordneten, zur Anbringung eines Zahnersatzstücks vorgesehenen zweiten Implantat-Teil (4), wobei die Implantat-Teile (2, 4) über einen an eines der Implantat-Teile (2, 4) angeformten, in einen im anderen Implantat-Teil (2, 4) vorgesehenen Aufnahmekanal (10) einschiebbaren Verbindungszapfen (8) mechanisch miteinander verbindbar sind, und wobei der Außenquerschnitt des Verbindungszapfens (8) und daran angepasst der Innenquerschnitt des diesem zugeordneten Aufnahmekanals (10) in einem Indizierungsbereich (20) jeweils als Mehrkant ausgeführt sind, soll auch bei hoher Passgenauigkeit der Komponenten und entsprechend gering gehaltenem rotatorischen Spiel des Aufbauteils gegenüber dem Pfostenteil dennoch eine besonders einfache Montage in vergleichsweise kurzer Montagezeit ermöglichen. Dazu umfasst der Verbindungszapfen (8) erfindungsgemäß im Indizierungsbereich (20) mindestens zwei Teilabschnitte (24, 26), wobei die Außenkanten (30, 32) des Mehrkants in einem ersten, endseitigen Teilabschnitt (24) stärker abgerundet sind als in einem zweiten Teilabschnitt (26).

## Beschreibung

Die Erfindung betrifft ein Dental-Implantatsystem mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil, wobei die Implantat-Teile über einen an eines der Implantat-Teile angeformten, in einen im anderen Implantat-Teil vorgesehenen Aufnahmekanal einschiebbaren Verbindungszapfen mechanisch miteinander verbindbar sind, und wobei der Außenquerschnitt des Verbindungszapfens und daran angepasst der Innenquerschnitt des diesem zugeordneten Aufnahmekanals in einem Indizierungsbereich jeweils als Mehrkant ausgeführt sind.

Zum Ausgleich des Verlusts eines Zahnes können im Rahmen der rekonstruktiven Therapie Dentalimplantate zum Einsatz kommen. Sie werden üblicherweise anstelle eines extrahierten oder ausgefallenen Zahnes in den Kieferknochen eingesetzt, um dort nach einer Einheilphase von etwas vier bis zwölf Wochen ein als Zahnersatz dienendes prothetisches Teil oder eine Krone zu halten. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil bezeichnetes zweites Implantat-Teil umfasst, an das wiederum das als Prothese oder dergleichen vorgesehene Zahnersatzstück anbringbar ist. Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Zur mechanischen Verbindung der Implantat-Teile miteinander ist üblicherweise ein an eines der Implantat-Teile, in der Regel an das Aufbauteil, angeformter Verbindungszapfen vorgesehen. Dieser ist in einen im anderen Implantat-Teil, in der Regel im Pfostenteil, vorgesehenen Aufnahmekanal einschiebbar. Hinsichtlich Geometriewahl und Dimensionierung, insbesondere der Querschnitte, sind der Verbindungszapfen einerseits und der Aufnahmekanal andererseits dabei üblicherweise derart aneinander angepasst, das bei vergleichsweise einfacher Montierbarkeit dennoch eine gute Führung der Bauteile ineinander und damit eine ausreichend hohe mechanische Stabilität erreichbar sind. Das Aufbauteil, das üblicherweise an seinem oberen Bereich mit einer Krone, einer anderen prothetischen Versorgung oder dergleichen in an sich bekannter Weise ausgestattet wird, kann dabei zur mechanischen Verbindung mit dem Pfostenteil über den in den Aufnahmekanal eingeschobenen Verbindungszapfen mit dem Pfostenteil verklebt sein. Das Aufbauteil kann aber auch in das Pfostenteil eingepresst werden und lediglich über eine Verklemmung fixiert werden, oder auch zusätzlich durch eine Zementierung oder Verklebung fixiert werden. Üblich ist aber auch die Verbindung von Aufbauteil und Pfostenteil miteinander über eine Schraubverbindung, bei der eine geeignete Verbindungsschraube durch einen entsprechenden Kanal im Aufbauteil geführt ist und in ein zugeordnetes Gewinde im Pfostenteil eingreift.

Im Hinblick auf die bei der Kaubelastung auftretenden Kräfte und die gewünschte Langlebigkeit bei der Verwendung eines derartigen Dentalimplantats ist die mechanische Stabilität der Anordnung gegenüber verschiedenartigen Belastungen von besonderer Bedeutung. Insbesondere soll dabei in der Regel auch einer Rotation oder Verdrehung zwischen dem Aufbauteil und dem Pfostenteil durch äußere Kräfte, meist bedingt durch die Kaubelastung, entgegengewirkt werden. Dazu wird üblicherweise eine mechanische Indizierung in Form einer mechanischen Sperre verwendet, oder es wird die Flächenpressung zwischen dem Aufbauteil und dem Pfostenteil geeignet gewählt. Zur Indizierung und zur Vermeidung der Rotation des Aufbauteils auf dem Pfostenteil kann insbesondere eine geeignete Konturierung des Querschnitts des Verbindungszapfens einerseits und des diesem zugeordneten Aufnahmekanals andererseits vorgesehen sein, um die genannte mechanische Sperre zu bilden.

Die mechanische Sperre zwischen Aufbauteil und Pfostenteil mehrteiliger Implantatsysteme in der Art einer Indizierung dient aber nicht nur dem Zweck, einer Rotationsbelastung entgegenzuwirken, sondern soll insbesondere auch das korrekte und positionsgenaue Einbringen des Implantats in den Patientenmund bei möglichst kurz gehaltener Behandlungsdauer begünstigen. Nach der Einbringung des eigentlichen Implantats, vorzugsweise nach der Einheilung der Pfostenteile, müssen bei derartigen Systemen nämlich zur Anfertigung der Krone, der Brücke oder anderer Prothesen die räumlichen und geometrischen Informationen der Restbezahnung (beispielsweise Antagonisten, mesial und distal der Insertionsstelle stehende Zähne), der Schleimhaut und des Pfostenteils oder Implantats oder des montierten Aufbauteils erfasst werden. Diese räumlichen und geometrischen Informationen sind notwendig, um die Krone, Brücke oder dergleichen passgenau und anatomisch optimiert zu fertigen.

Die Indizierung, also die Festlegung der möglichen rotatorischen Ausrichtung zwischen Aufbauteil einerseits und Pfostenteil andererseits, wird üblicherweise durch eine geeignete Vorgabe der Querschnittskontur des Verbindungszapfens einerseits und des Aufnahmekanals andererseits in deren Verbindungsbereich erreicht. Üblicherweise sind dazu der Außenquerschnitt des Verbindungszapfens und daran angepasst der Innenquerschnitt des diesem zugeordneten Aufnahmekanals in einem Indizierungsbereich, der sich in Längsrichtung des Verbindungszapfens gesehen über dessen gesamte Länge oder aber auch nur über einen Teilbereich erstrecken kann, jeweils als Mehrkant, insbesondere als Sechskant, ausgeführt. Bei einer Sechskantverbindung sind somit bei der Montage des Aufbauteils sechs Positioniermöglichkeiten des Aufbauteils auf dem Pfostenteil gegeben.

Bei einer derartigen Ausgestaltung des Indizierungsbereichs als Mehrkant-Verbindung werden als hauptsächliche Auslegungsziele einerseits eine vergleichsweise einfache Montierbarkeit und andererseits eine vergleichsweise hohe Passgenauigkeit angestrebt. Bezüglich der Montierbarkeit wird dabei insbesondere angestrebt, beim Einbringen des Verbindungszapfens in den Aufnahmekanal die korrekte Einbauorientierung leicht und schnell aufzufinden und gleichzeitig Verkantungen oder dergleichen zu vermeiden, so dass das Einbringen des Aufbauteils in den Patientenmund in vergleichsweise kurzer Zeit und damit mit kurzer Behandlungsdauer erfolgen kann. Bezüglich der Passgenauigkeit wird hingegen angestrebt, das rotatorische Spiel zwischen den Komponenten, also zwischen Verbindungszapfen einerseits und Aufnahmekanal im Pfostenteil, besonders gering zu halten, um damit eine ausreichend hohe mechanische Stabilität und eine lange Einsatzdauer des Implantatsystems zu ermöglichen. Beide Auslegungsziele stehen jedoch in Konflikt miteinander, da eine hohe Passgenauigkeit mit sehr geringenToleranzen der Bauteile gegeneinander einhergeht, so dass für die Montage eine entsprechend genaue Positionierung der Bauteile zueinander bei erhöhter Gefahr von unerwünschten Verkantungen erfoderlich ist.

Der Erfindung liegt daher die Aufgabe zugrunde, ein Dental-Implantatsystem der oben genannten Art anzugeben, das bei hoher Passgenauigkeit der Komponenten und entsprechend gering gehaltenem rotatorischen Spiel des Aufbauteils gegenüber dem Pfostenteil dennoch eine besonders einfache Montage in vergleichsweise kurzer Montagezeit ermöglicht.

Diese Aufgabe wird erfindungsgemäß dadurch gelöst, dass der Verbindungszapfen im Indizierungsbereich mindestens zwei Teilabschnitte umfasst, wobei die Außenkanten in einem ersten, endseitigen Teilabschnitt stärker abgerundet sind als in einem zweiten Teilabschnitt.

Die Erfindung geht dabei von der Überlegung aus, dass die gleichzeitige Erfüllung der beiden konkurrierenden Auslegungszielen erreichbar ist, indem am Verbindungszapfen individualisierte, jeweils auf eines der Auslegungsziele gezielt ausgestaltete Teilbereiche oder Teilabschnitte geschaffen werden. In diesen Teilbereichen oder ―abschnitten sollten die charakteristischen Parameter geeignet auf das jeweilige Auslegungsziel hin ausgelegt werden. Als geeigneter Parameter, über den die Differenzierung zwischen den genannten Auslegungszielen möglich ist, ist dabei die Abrundung der Außenkanten des Mehrkants vorgesehen.

Bei der Herstellung eines Mehrkants ist es nämlich aus fertigungstechnischen Gründen nicht zu vermeiden, dass die Kanten ― im Gegensatz zur mathematischtheoretischen Form eines echten spitzen Winkels ― eine gewisse Abrundung aufweisen. Je nach Anforderung können die Kanten dabei hochgenau und einem echten spitzen Winkel stark angenähert mit vergleichsweise geringer Abrundung ausgeführt werden. Ein derartig ausgestalteter Mehrkant-Außenquerschnitt führt zu einer sehr hohen Passgenauigkeit beim Einbringen in den zugeordneten Aufnahmekanal, und das rotatorische Spiel ist sehr gering. Allerdings ist in diesem Fall eine hochgenaue Ausrichtung der Bauteile zueinander beim Zusammenfügen erforderlich. Im Gegensatz dazu können die Kanten des Mehrkants auch vergleichsweise stark abgerundet ausgeführt sein. Dies erlaubt beim Zusammenfügen der Komponenten einige Toleranzen bezüglich der Ausrichtung der Komponenten zueinander, bedingt aber im montierten System ein erhöhtes rotatorisches Spiel der Komponenten zueinander.

Die Erfüllung der beiden genannten Auslegungsziele ist somit möglich, indem ― vorzugsweise endseitig am Indizierungsbereich des Verbindungszapfens ― ein erster, gezielt auf die Erleichterung der Montage ausgerichteter Teilabschnitt des Verbindungszapfens mit einem zweiten, gezielt auf die Minimierung des rotatorischen Spiels der Komponenten zueinander ausgerichteten Teilabschnitt des Verbindungszapfens kombiniert ist. Zur Erleichterung der Montage und dabei insbesondere der Positionierung der Komponenten zueinander weist der erste Teilabschnitt dabei eine vergleichsweise größere Abrundung der Außenkanten und der zweite Teilabschnitt eine vergleichsweise geringere Abrundung der Außenkanten auf.

Vorteilhafte Ausgestaltungen der Erfindung sind Gegenstand der Unteransprüche.

Um eine hohe mechanische Stabilität des Systems zu gewährleisten, ist der Verbindungszapfen ― und dementsprechend korrespondierend auch der Aufnahmeknanal im anderen Implantat-Teil ― vorzugsweise mit gerade ausgeführten, im wesentlichen parallel zur Längsachse des Verbindungszapfens verlaufenden Seitenflächen ausgeführt. Um aber die Montage noch weiter zu erleichtern, ist der Verbindungszapfen im Endbereich des Indizierungsbereichs, der bei der Monate in den Aufnahmekanal eingeschoben wird, vorzugsweise in seinen äußersten Dimensionen spitz zulaufend und damit sich zum freien Ende hin verjüngend ausgestaltet. Dazu sind die abgerundeten Außenkanten des Verbindungszapfens vorteilhafterweise im ersten Teilbereich zu dessen freiem Ende hin sich konisch verjüngend ausgebildet.

Um die mechanische Stabilität des Systems nach der Montage besonders zu begünstigen und zudem eine gewisse Dichtigkeit und damit Langlebigkeit zu gewährleisten, weist der Verbindungszapfen in vorteilhafter Weiterbildung einen weiteren, gezielt hierfür ausgelegten Bereich auf. Dazu ist der Verbindungszapfen vorteilhafterweise in einem Dichtungsbereich mit sich in Richtung auf sein freies Ende zu verjüngendem Querschnitt, vorzugsweise konisch, ausgestaltet.

In besonders vorteilhafter Ausgestaltung ist auch das jeweils andere, den Aufnahmekanal für den Verbindungszapfen aufweisende Implantat-Teil, also insbesondere das so genannte Pfostenteil oder eigentliche Implantat, gezielt für eine besonders einfach gehaltene, insbesondere verkantungsfreie Montage ausgeführt. In der Art einer an die Grundstruktur des Verbindungszapfens angepassten Bauweise umfasst dazu der Aufnahmekanal vorzugsweise ein als Innen-Mehrkant ausgeführtes Endkanalstück und diesem in Einschubrichtung des Verbindungszapfens gesehen vorgelagert ein sich im Querschnitt zum Endkanalstück hin verjüngendes, in weiterer vorteilhafter Ausgestaltung konisch ausgeführtes, Kanalstück.

Um dabei die Montage besonders einfach zu halten und zudem Verkantungen während der Montage besonders wirkungsvoll zu vermeiden, weist das Kanalstück in besonders vorteilhafter Ausgestaltung unmittelbar benachbart zum Endkanalstück, also im Bereich des Übergangs zum Endkanalstück, einen größeren Innendurchmesser auf als der Inkreis des durch den Innenquerschnitt des Endkanalstücks gebildeten Mehrkants. Der Inkreis ist dabei gemäß herkömmlicher Definition derjenige Kreis, der die Seitenlinien des Querschnitts des Mehrkants jeweils nur in einem Punkt berührt; bei geradzahliger Symmetrie des Mehrkants ist der Durchmesser des Inkreises also gleich dem Abstand zweier gegenüberliegender Seiten voneinander. Durch den im Vergleich hierzu größer gewählten endseitigen Innendurchmesser des Kanalstücks entsteht somit im Übergangsbereich eine Stoßkante zwischen den Ecken des darunterliegenden Mehrkants, auf der der Verbindungszapfen des jeweils anderen Implantat-Teils beim Zusammenfügen der Bauteile aufliegen kann, wenn die rotatorische Ausrichtung nicht vollständig korrekt sein sollte.

In weiterer vorteilhafter Ausgestaltung ist der Innendurchmesser des Kanalstücks zudem unmittelbar benachbart zum Endkanalstück kleiner als der Durchmesser des Umkreises des durch den Innenquerschnitt des Endkanalstücks gebildeten Mehrkants. Der Umkreis ist dabei gemäß herkömmlicher Definition derjenige Kreis, der durch die Eckpunkte des Querschnitts des Mehrkants verläuft; bei geradzahliger Symmetrie des Mehrkants ist der Durchmesser des Umkreises also gleich dem Abstand zweier gegenüberliegender Ecken voneinander. Durch den im Vergleich hierzu kleiner gewählten endseitigen Innendurchmesser des Kanalstücks entsteht somit im Übergangsbereich im Bereich der Ecken des darunterliegenden Mehrkants jeweils eine Fortsetzung der Eckengeometrie des Mehrkants aus dem Endkanalstück in den vorzugsweise konisch geformten Übergangsbereich des Kanalstücks hinein.

Gerade durch die Kombination dieser Geometrieparameter miteinander entstehen somit die genannten Stoßkanten in den Bereichen zwischen den Ecken des Mehrkants, auf denen bei der Montage der Komponenten der Endbereich des Verbindungszapfens aufliegen kann, gemeinsam mit Fortsetzungen der Ecken des Mehrkants im Übergangsbereich. Durch die endseitig abgerundete Ausführung der Außenkontur des Verbindungszapfens kann dieser bei Aufliegen auf den Stoßkanten insoweit rotiert werden, dass eine vergleichsweise unproblematische Korrektur der rotatorischen Ausrichtung ohne nennenswerte Gefahr von Verkantungen vorgenommen werden kann.

Die Stoßkante kann dabei im wesentlichen gerade liegend ausgeführt sein. In weiterer vorteilhafter Ausgestaltung ist die im Kontaktbereich vom Kanalstück und vom Endkanalstück gebildete Stoßkante aber abgeschrägt ausgeführt. Der Neigungswinkel der Stoßkante, insbesondere nach innen zur Zentralachse des Aufnahmekanals hin, ist vorteilhafterweise kleiner als das Dreifache, vorzugsweise kleiner als das Zweifache, besonders bevorzugt kleiner als das 1,5-fache, des Konuswinkels im Dichtungsbereich. Dadurch ist auf besonders günstige Weise eine zuverlässige Führung des Verbindungszapfens beim Einbringen in den Aufnahmekanal gewährleistet.

Die mit der Erfindung erzielten Vorteile bestehen insbesondere darin, dass durch den im Indizierungsbereich abschnittsweise mit unterschiedlichen Geometrieparametern, insbesondere mit abschnittsweise variierender Abrundung der Außenkanten, ausgestalteten Verbindungszapfen die Erreichung eigentlich widersprüchlicher Auslegungsziele für das Gesamtsystem, nämlich einfache und schnelle Montierbarkeit bei gering gehaltenem rotatorischen Spiel, zuverlässig möglich ist. Die Abrundung kann dabei wie vorliegende spezifiziert für Mehrkant-basierte Systeme vorgesehen sein. Selbstverständlich ist die Abrundung aber auch bei ähnlichen Systemen, bei denen die Indizierung durch lokale Maxima des Durchmessers gegeben ist, ebenso vorteilhaft einsetzbar.

Ein Ausführungsbeispiel der Erfindung wird anhand einer Zeichnung näher erläutert. Darin zeigen:
- FIG. 1: ein Dental-Implantatsystem in angeschnittener Darstellung,
- FIG. 2: das Dental-Implantatsystem nach FIG. 1 in Explosionsdarstellung,
- FIG. 3: das Pfostenteil des Dental-Implantatsystems nach FIG. 1 in geschnittener Ansicht,
- FIG. 4, 5: das Aufbauteil des Dental-Implantatsystems nach FIG. 1 in schräger bzw. seitlicher Ansicht, und
- FIG. 6,7: jeweils den Verbindungszapfen des Dentalimplantats gem. FIG. 1 im Querschnitt.

Gleiche Teile sind in allen Figuren mit denselben Bezugszeichen versehen.

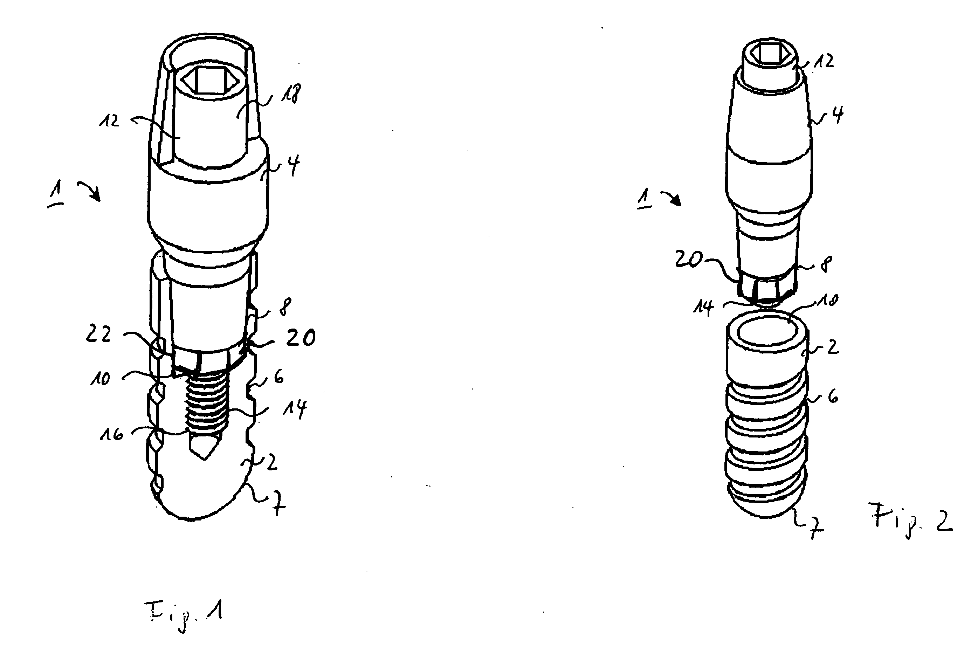

Das in Figur 1 angeschnitten im montierten Zustand und in Figur 2 als Explosionszeichnung dargestellte Dentalimplantat 1 oder Dental-Implantatsystem ist zum Einsatz in den Kieferknochen anstelle eines extrahierten oder ausgefallenen Zahnes vorgesehen, um dort ein als Zahnersatz dienendes prothetisches Teil oder eine Krone zu halten. Das Dentalimplantat 1 ist dazu mehrteilig ausgeführt und umfasst ein als sogenanntes Pfostenteil ausgeführtes erstes Implantat-Teil 2 und ein diesem zugeordnetes, zur Anbringung eines Zahnersatzstücks vorgesehenes, auch als Aufbauteil bezeichnetes zweites Implantat-Teil 4.

Das erste Implantat-Teil 2 oder Pfostenteil ist dabei außenseitig mit einem Außengewinde 6 versehen, das insbesondere am apikalen Ende 7 als selbstschneidendes Schraubengewinde ausgestaltet ist. Damit kann das erste Implantat-Teil 2 oder Pfostenteil durch Einschrauben an der vorgesehenen Stelle in den Kieferknochen eingesetzt werden. Die Steigung des Gewindes 6 kann dabei gleichmäßig oder auch veränderlich ausgeführt sein, wobei durch geeignete Parameterwahl auch evtl. unterschiedliche biologische Gegebenheiten oder dergleichen sowie unterschiedliches Einwachsverhalten berücksichtigt sein können. Die Konstruktion und Auslegung des Gewindes 6 ist dabei insbesondere im Hinblick auf eine gewünschte hohe Primärstabilität und eine gleichmäßige Weiterleitung der bei Kaubelastung des Dentalimplantats 1 auftretenden Kräfte in den Kieferknochen ausgelegt.

Um nach geeigneter Anbringung des Zahnersatzstücks oder der Prothese am Aufbauteil oder zweiten Implantat-Teil 4 ein Einbringen in das Pfostenteil oder erste Implantat-Teil 2 bei hoher mechanischer Stabilität zu ermöglichen, ist an das zweite Implantat-Teil 4 ein Verbindungszapfen 8 angeformt, der in einen zugeordneten, im ersten Implantat-Teil 2 vorgesehenen Aufnahmekanal 10 einschiebbar ist. Durch das Einschieben des Verbindungszapfens 8 in den Aufnahmekanal 10 entsteht eine mechanische Verbindung der Implantat-Teile 2, 4 miteinander. Die mechanische Verbindung von Pfostenteil 2 und Aufbauteil 4 erfolgt über eine zugeordnete Verbindungsschraube 12, deren Außengewinde 14 in ein im Pfostenteil 2 vorgesehenes Innengewinde 16 eingeschraubt wird. Der Schraubenkopf 18 der Verbindungsschraube 12 presst dabei das Aufbauteil 4 auf das Pfostenteil 2.

Das Dentalimplantat 1 ist gezielt dafür ausgelegt, bei geeigneter Vorbereitung des Aufbauteils 4 eine zuverlässige und mechanisch stabile rotatorische Ausrichtung des Aufbauteils 4 selbst beim Auftreten vergleichsweise hoher Kräfte, insbesondere durch die Kaubelastung, zu gewährleisten. Dabei soll insbesondere auch die Einbringung und das Eingliedern des mit dem Zahnersatzstück versehenen Aufbauteils 4 in das in dem Kieferknochen eingewachsene Pfostenteil 2 in verhältnismäßig kurzer Behandlungszeit erfolgen können. Dazu ist der Verbindungszapfen 8 in seiner Außenkontur an die Innenkontur des Aufnahmekanals 10 angepasst, wobei beide in Längsrichtung gesehen konisch geformt sein können.

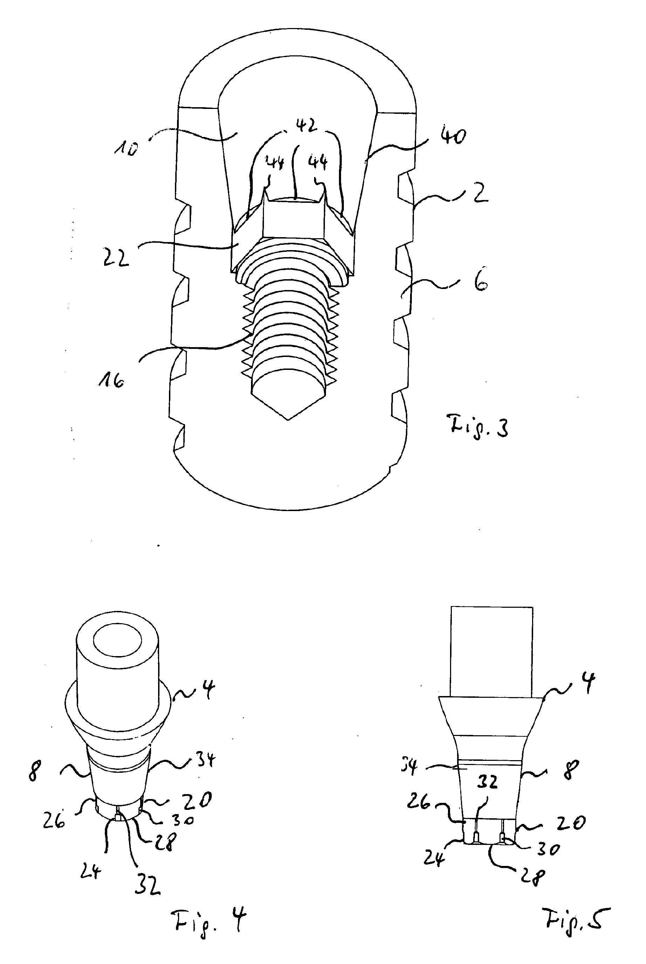

Die Außenkontur des Verbindungszapfens 8 ― und dementsprechend angepasst die Innenkontur des Aufnahmekanals 10 ― sind im Ausführungsbeispiel als solche im Querschnitt mit einer mehrzähligen Symmetrie ausgestaltet, so dass beim Zusammenfügen der genannten Komponenten ein rotatorisches Gesperre entsteht und damit eine zuverlässige rotatorische Ausrichtung des Aufbauteils 4 relativ zum Pfostenteil 2 eingestellt werden kann. Zum Zweck einer derartigen Indizierung und zur Ausbildung des genannten rotatorischen Gesperres umfasst der Verbindungszapfen 8 endseitig einen angeformten Indizierungsbereich 20, in dem der Verbindungszapfen in seinem Außenquerschnitt als Mehrkant ― im Ausführungsbeispiel als Sechskant ― ausgeführt ist. Der Indizierungsbereich 20 greift im montierten Zustand in ein entsprechendes, zugeordnetes Endkanalstück 22 im Aufnahmekanal 10 ein. Wie der geschnittenen Darstellung des Pfostenteils oder ersten Implantat-Teils 2 in FIG. 3 entnehmbar ist, ist das Endkanalstück 22 dabei mit an den Außenquerschnitt des Verbindungszapfens 8 im Indizierungsbereich 20 angepasstem Innenquerschnitt und damit ebenso als Innensechskant ausgeführt.

Das Dentalimplantat 1 ist gezielt dafür ausgelegt, dass auch bei hoher Passgenauigkeit der Komponenten, also insbesondere Verbindungszapfen 8 und Aufnahmekanal 10, und entsprechend gering gehaltenem rotatorischen Spiel des Aufbauteils 4 gegenüber dem Pfostenteil 2 dennoch eine besonders einfache Montage in vergleichsweise kurzer Montagezeit ermöglicht ist. Dazu ist der Verbindungszapfen 8 im Indizierungsbereich 20 mehrstufig ausgeführt und umfasst zwei Teilabschnitte 24, 26, die in ihrer Geometrie- und Formgebung an unterschiedliche Auslegungsziele angepasst sind. Im ersten, dem freien Ende 28 des Verbindungszapfens 8 benachbarten Teilabschnitt 24 ist der Indizierungsbereich 20 derart konturiert, dass eine vergleichsweise einfache und schnelle Montage und insbesondere ein erleichtertes Einbringen des Indizierungsbereichs 20 in das Endkanalstück 22 gewährleistet ist. Dazu ist die Konturierung des Außenquerschnitts des Verbindungszapfens 8 im ersten Teilbereich 24 für eine fehlertolerante Positionierung beim Zusammenfügen der Implantat-Teile 2, 4 ausgeführt. Dies wird erreicht, indem die Außenkanten 30 des Mehrkants im ersten Teilabschnitt 24 vergleichsweise stark abgerundet sind.

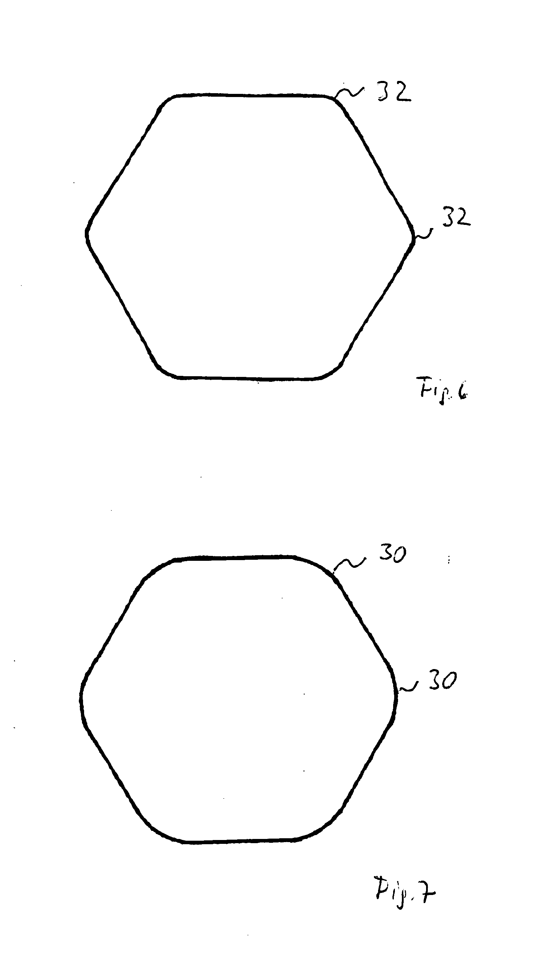

Im Gegensatz dazu ist der zweite Teilabschnitt 26 durch geeignete Konturierung des Außenquerschnitts des Verbindungszapfens 8 gezielt für eine Minimierung des rotatorischen Spiels zwischen Aufbauteil und Pfostenteil ausgelegt. Dazu sind die Außenkanten 32 des Mehrkants im zweiten Teilbereich 26 nur wenig abgerundet. Im Vergleich ist das Dentalimplantat 1 also derart ausgeführt, dass die Außenkanten 30 des Mehrkants im ersten, endseitigen Teilabschnitt 24 des Verbindungszapfens 8 stärker abgerundet sind als die Außenkanten 32 des Mehrkants im zweiten Teilabschnitt 26 des Verbindungszapfens. Dies ist der vergleichenden Darstellung der Querschnitte in den Fig. 6, 7 entnehmbar.

Um die Montage und das Zusammenfügen der Implantat-Teile 2, 4 noch weiter zu erleichtern, sind die abgerundeten Außenkanten 30 des Verbindungszapfens 8 im ersten Teilabschnitt 24 zu dessen freiem Ende 28 hin sich konisch verjüngend ausgebildet. Weiterhin ist der Verbindungszapfen 8 in einem Dichtungsbereich 34 konisch ausgeführt, weist also einen sich in Richtung auf sein freies Ende 28 zu verjüngenden Querschnitt auf.

Wie der Darstellung des Pfostenteils oder ersten Implantat-Teils 2 in FIG. 3 entnehmbar ist, ist auch das Pfostenteil oder erste Implantat-Teil 2 durch besonders geeignete Ausgestaltung des Aufnahmekanals 10 gezielt für eine besonders einfach gehaltene, insbesondere verkantungsfreie, Montage ausgeführt. In der Art einer an die Grundstruktur des Verbindungszapfens 8 angepassten Bauweise umfasst dazu der Aufnahmekanal 10 in Einschubrichtung des Verbindungszapfens 8 gesehen dem als Innen-Mehrkant ausgeführtem Endkanalstück 22 vorgelagert ein sich im Querschnitt zum Endkanalstück hin verjüngendes, im Ausführungsbeispiel konisch ausgeführtes Kanalstück 40.

Das Kanalstück 40 weist in seinem dem Endkanalstück 22 unmittelbar benachbarten Endbereich, also im Bereich des Übergangs zum Endkanalstück 22, einen größeren Innendurchmesser auf als der Inkreis des durch den Innenquerschnitt des Endkanalstücks 22 gebildeten Mehrkants. Durch den im Vergleich hierzu größer gewählten endseitigen Innendurchmesser des Kanalstücks 40 entstehen somit im Übergangsbereich zwischen den Ecken des Mehrkants jeweils Stoßkanten 42, auf denen der Verbindungszapfen 8 beim Zusammenfügen der Bauteile aufliegen kann, wenn die rotatorische Ausrichtung nicht vollständig korrekt sein sollte.

Zusätzlich ist der Innendurchmesser des Kanalstücks 40 unmittelbar benachbart zum Endkanalstück 22 kleiner als der Durchmesser des Umkreises des durch den Innenquerschnitt des Endkanalstücks 22 gebildeten Mehrkants. Durch den im Vergleich hierzu kleiner gewählten endseitigen Innendurchmesser des Kanalstücks 40 entsteht somit im Übergangsbereich im Bereich der Ecken des darunterliegenden Mehrkants jeweils eine Fortsetzung 44 der Eckengeometrie des Mehrkants aus dem Endkanalstück 22 in den konisch geformten Übergangsbereich des Kanalstücks 40 hinein.

Weiterhin ist die im Kontaktbereich vom Kanalstück 40 und vom Endkanalstück 22 gebildete Stoßkante 42 jeweils abgeschrägt ausgeführt. Der Neigungswinkel der Stoßkante 42, insbesondere nach innen zur Zentralachse des Aufnahmekanals 10 hin, ist dabei im Ausführungsbeispiel kleiner als das 1,5-fache, des Konuswinkels im Dichtungsbereich 34 gewählt. Dadurch ist auf besonders günstige Weise eine zuverlässige Führung des Verbindungszapfens 8 beim Einbringen in den Aufnahmekanal 10 gewährleistet.

### Bezugszeichenliste

- 1: Dentalimplantat
- 2: Implantat-Teil
- 4: Implantat-Teil
- 6: Außengewinde
- 7: apikales Ende
- 8: Verbindungszapfen
- 10: Aufnahmekanal
- 12: Verbindungsschraube
- 14: Außengewinde
- 16: Innengewinde
- 18: Schraubenkopf
- 20: Indizierungsbereich
- 22: Endkanalstück
- 24,26: Teilabschnitt
- 28: freies Ende
- 30,32: Außenkante
- 34: Dichtungsbereich
- 40: Kanalstück
- 42: Stoßkante
- 44: Fortsetzung

## Patentansprüche

1. Dentalimplantat (1) mit einem zur Einbringung in einen Kieferknochen vorgesehenen ersten Implantat-Teil (2) und mit einem diesem zugeordneten, zur Anbringung eines Zahnersatzstücks vorgesehenen zweiten Implantat-Teil (4), wobei die Implantat-Teile (2, 4) über einen an eines der Implantat-Teile (2, 4) angeformten, in einen im anderen Implantat-Teil (2, 4) vorgesehenen Aufnahmekanal (10) einschiebbaren Verbindungszapfen (8) mechanisch miteinander verbindbar sind, und wobei der Außenquerschnitt des Verbindungszapfens (8) und daran angepasst der Innenquerschnitt des diesem zugeordneten Aufnahmekanals (10) in einem Indizierungsbereich (20) jeweils als Mehrkant ausgeführt sind, **dadurch gekennzeichnet, dass** der Verbindungszapfen (8) im Indizierungsbereich (20) mindestens zwei Teilabschnitte (24, 26) umfasst, wobei die Außenkanten (30, 32) des Mehrkants in einem ersten, endseitigen Teilabschnitt (24) stärker abgerundet sind als in einem zweiten Teilabschnitt (26).

2. Dentalimplantat (1) nach Anspruch 1, **dadurch gekennzeichnet, dass** die abgerundeten Außenkanten (30) des Verbindungszapfens (8) im ersten Teilabschnitt (24) zu dessen freiem Ende (28) hin sich konisch verjüngend ausgebildet sind.

3. Dentalimplantat (1) nach Anspruch 1 oder 2, **dadurch gekennzeichnet, dass** der Verbindungszapfen (8) in einem Dichtungsbereich (34) einen sich in Richtung auf sein freies Ende (28) zu verjüngenden Querschnitt aufweist, vorzugsweise konisch ausgestaltet ist.

4. Dentalimplantat (1) nach einem der Ansprüche 1 bis 3, **dadurch gekennzeichnet, dass** der Aufnahmekanal (10) ein als Innen-Mehrkant ausgeführtes Endkanalstück (22) und diesem in Einschubrichtung des Verbindungszapfens (8) gesehen vorgelagert ein sich im Querschnitt zum Endkanalstück (22) hin verjüngendes Kanalstück (40) umfasst.

5. Dentalimplantat (1) nach Anspruch 4, **dadurch gekennzeichnet, dass** das Kanalstück (40) im Innenquerschnitt konisch ausgeführt ist.

6. Dentalimplantat (1) nach Anspruch 4 oder 5, **dadurch gekennzeichnet, dass** das Kanalstück (40) unmittelbar benachbart zum Endkanalstück (22) einen größeren Innendurchmesser aufweist als der Inkreis des durch den Innenquerschnitt des Endkanalstücks (22) gebildeten Mehrkants.

7. Dentalimplantat (1) nach Anspruch 6, **dadurch gekennzeichnet, dass** die im Kontaktbereich von Kanalstück (40) und Endkanalstück (22) von diesen gebildete Stoßkante (42) abgeschrägt ausgeführt ist.

8. Dentalimplantat (1) nach Anspruch 7, **dadurch gekennzeichnet, dass** der Neigungswinkel der Stoßkante (42) kleiner als das Dreifache, vorzugsweise kleiner als das Zweifache, besonders bevorzugt kleiner als das 1,5-fache, des Konuswinkels im Dichtungsbereich (34) ist.

9. Dentalimplantat nach einem der Ansprüche 6 bis 8, **dadurch gekennzeichnet, dass** der Innendurchmesser des Kanalstücks (40) unmittelbar benachbart zum Endkanalstück (22) kleiner ist als der Durchmesser des Umkreises des durch den Innenquerschnitt des Endkanalstücks (22) gebildeten Mehrkants.
